# EUROPÄISCHE PATENTANMELDUNG

(11) **EP 1 669 232 A2**
(43) Veröffentlichungstag der Anmeldung: **14.06.2006**
(21) Anmeldenummer: 05026570.1
(22) Anmeldetag: 06.12.2005
(51) Int. Cl.: B60J 7/00

(54) **Verdunkelungsvorrichtung mit aufrollbarem Rollo**

(30) Priorität: 10.12.2004 FR 0413159
(71) Anmelder: Webasto AG, 82131 Stockdorf (DE)
(72) Erfinder: Geslot, Christophe, 13100 Aix-en-Provence (FR)

(57) **Zusammenfassung**

Die vorliegende Erfindung betrifft eine Verdunkelungsvorrichtung 1, die einen Stoff 10, der für die Verschiebung zwischen einer Aufnahmeposition und einer ausgefahrenen Position beweglich montiert ist, und mindestens eine Querverstärkung 30 aufweist, welche mit dem Stoff 10 fest verbunden und in der Lage ist, den Stoff 10 in Längsrichtung und in Querrichtung in dem abzudunkelnden Bereich abzustützen.

Die Erfindung ist insofern bemerkenswert, als jede Querverstärkung 30 des Weiteren relativ zum Stoff 10 für die Verschiebung zwischen einer liegenden Position, in der er sich in einer im Wesentlichen zu dem direkt danebenliegenden Teil des Stoffes 11 parallelen Weise erstreckt, wenn sich der Stoff 10 in der Aufnahmeposition befindet, und einer angehobenen Position, in der er sich in einer im Wesentlichen zu dem direkt danebenliegenden Teil des Stoffes 10 senkrechten Weise erstreckt, wenn sich der Stoff 10 in der ausgefahrenen Position befindet.

## Beschreibung

Die vorliegende Erfindung betrifft eine Vorrichtung zur mindestens teilweisen Abdeckung einer oder mehrerer lichtdurchlässiger Scheiben mittels eines aufrollbaren Rollos.

Die Erfindung findet eine besonders vorteilhafte, jedoch nicht ausschließliche Anwendung auf dem Gebiet der Kraftfahrzeuge.

Heute werden immer mehr Dächer von Kraftfahrzeugen mit lichtdurchlässigen, d.h. transparenten oder durchscheinenden, Scheiben ausgestattet. Es handelt sich im Allgemeinen entweder um ein Schiebedachsystem, dessen bewegliche Scheibe aus Glas ausgeführt wird, oder um eine feste Scheibe aus Glas, die direkt einen mehr oder weniger großen Teil der Dachhaut bildet, die gegebenenfalls einen oberen Bereich der Windschutzscheibe bilden kann.

Unabhängig von einer bestimmten Ausführungsform wird in der Praxis diese Art von mehr oder weniger transparenter Scheibe systematisch in Kombination mit einer Lichtverdunkelung verwendet, welche geeignet ist, parallel zur Innenfläche der Glasscheibe ausgefahren zu werden oder nicht. Die Aufgabe einer solchen Vorrichtung ist es, zu verhindern, dass die Lichtstrahlen, die durch die Glasscheibe eindringen, sich im Inneren des Fahrgastraums verbreiten. Ziel ist dabei natürlich, den Treibhauseffekt im Inneren des Kraftfahrzeuges an Tagen mit starker Sonneneinstrahlung zu begrenzen.

Zu den nach dem Stand der Technik an sich bekannten Verdunkelungsvorrichtungen gehören die Vorrichtungen, deren Funktion den Einsatz eines aufrollbaren Stoffes erfordert. Schematisch ausgedrückt wird ein mehr oder weniger lichtdurchlässiger Stoff für eine Verschiebung relativ zu einem abzudunkelnden Bereich zwischen einer Aufnahmeposition und einer ausgefahrenen Position beweglich montiert. Das Ganze ist in der Weise ausgestaltet, dass der Stoff in der Aufnahmeposition auf ein von dem abzudunkelnden Bereich beabstandet angebrachtes Aufwickelrohr aufgewickelt wird und der Stoff sich in der ausgefahrenen Position unterhalb des abzudunkelnden Bereiches erstreckt.

Es kann sich manchmal als vorteilhaft erweisen, dass der Stoff in Längsrichtung und/oder in Querrichtung in dem abzudunkelnden Bereich gestützt werden kann. Dies ist insbesondere dann der Fall, wenn die Scheibe große Abmessungen aufweist, um jenes "Hängematten"-Phänomen unter der Wirkung des Eigengewichts des Stoffes zu vermeiden und so die Effizienz und das rein ästhetische Aussehen der Verdunkelungsvorrichtung zu garantieren. Dies ist aber auch dann der Fall, wenn die abzudunkelnde Scheibe eine signifikante Krümmung aufweist, um bestmöglich der Innenseite der Scheibe zu folgen und somit die Raumausnutzung im Inneren des Fahrzeuges zu optimieren.

Unabhängig davon ist es zur Ausführung einer solchen Längs- und/oder Querabstützung insbesondere bekannt, mit dem Stoff eine oder mehrere relativ steife Querverstärkungen zu verbinden, die außerdem in der Lage sind, zwischen zwei Führungsschienen, die jeweils beiderseits des abzudunkelnden Bereiches angeordnet sind, zu gleiten. Das bloße Vorhandensein der mit dem Stoff fest verbundenen Querverstärkungen ist ausreichend, um die angestrebte Abstützung in Querrichtung zu erhalten. Und wenn dies mit der Verwendung von im Wesentlichen zur Krümmung der abzudunkelnden Scheibe parallel geformten Führungsschienen kombiniert ist, gestattet es dies in vorteilhafter Weise, die gewünschte Abstützung in Längsrichtung zu erhalten. Es ist anzumerken, dass aufgrund der Tatsache, dass die Querverstärkungen mit dem Stoff insbesondere mittels Überzügen fest verbunden sind, diese in der Lage sind, zusammen mit ihm einerseits im abzudunkelnden Bereich zu gleiten und sich andererseits zusammen mit ihm um das Aufwickelrohr aufzuwickeln.

Bei dieser Art von Ausgestaltung ist es wesentlich, dass jede Querverstärkung ausreichend steif ist, um den Biegebeanspruchungen standzuhalten, die auftreten, wenn sie einerseits durch die Führungsschienen getragen wird und andererseits den Stoff im abzudunkelnden Bereich abstützt. Zweck ist in der Tat, weitestgehend die Vibrationsprobleme zu beseitigen, die auftreten können, wenn das Fahrzeug in Betrieb ist. Deshalb haben die Querverstärkungen nach dem Stand der Technik im Allgemeinen relativ große Querschnitte, insbesondere in Bezug auf die Höhe. Es ist anzumerken, dass unter Höhe die Abmessung zu verstehen ist, die dem Teil der Verstärkung entspricht, welcher dazu bestimmt ist, sich senkrecht zur Stoff zu erstrecken, wenn die durch die Querverstärkung sichergestellte Längs- und/oder Querabstützung wirksam wird.

Diese Art von Verdunkelungsvorrichtung weist jedoch den Nachteil auf, im Aufnahmebereich des Stoffes besonders sperrig zu sein. Die Tatsache, dass die Höhe jeder Querverstärkung zu derjenigen des Stoffes zum Zeitpunkt des Aufwickelns hinzukommt, erhöht signifikant den Durchmesser des Ganzen in der Aufnahmeposition. Schlussendlich ist dies besonders schädlich für die Raumausnutzung des Fahrzeuges, insbesondere in Bezug auf die Kopffreiheit.

Entsprechend ist das durch den Gegenstand der vorliegenden Erfindung zu lösende technische Problem, eine Verdunkelungsvorrichtung vorzuschlagen, die einerseits einen Stoff, der für die Verschiebung zwischen einer Aufnahmeposition, in der er von einem abzudunkelnden Bereich beabstandet aufgewickelt ist, und einer ausgefahrenen Position, in der er sich unterhalb des abzudunkelnden Bereiches erstreckt, beweglich montiert ist, und andererseits mindestens eine Querverstärkung aufweist, die mit dem Stoff fest verbunden und geeignet ist, den Stoff in Längs- und Querrichtung in dem abzudunkelnden Bereich abzustützen, wobei die Verdunkelungsvorrichtung es erlauben würde, die Probleme nach dem Stand der Technik zu vermeiden, indem insbesondere ein beträchtlich reduzierter Platzbedarf geboten wird und gleichzeitig eine optimale Abstützung des Stoffes in dem abzudunkelnden Bereich garantiert ist.

Die Lösung des gestellten technischen Problems besteht erfindungsgemäß darin, dass jede Querabstützung außerdem relativ zum Stoff für die Verschiebung zwischen einer liegenden Position, in der er sich im Wesentlichen zu dem direkt benachbarten Teil des Stoffes parallel erstreckt, wenn sich der Stoff in der Aufnahmeposition befindet, und einer angehobenen Position, in der er sich im Wesentlichen zu dem direkt benachbarten Teil des Stoffes senkrecht erstreckt, wenn sich der Stoff in der ausgefahrenen Position befindet, beweglich montiert ist.

Die so definierte Erfindung bietet den Vorteil, die relative Positionierung jeder Querverstärkung relativ zum Stoff als Funktion des Ausfahrzustandes des Stoffes variieren zu können. Dies ermöglicht konkret, den radialen Platzbedarf jeder Querverstärkung beim Aufrollen des Stoffes zu minimieren und gleichzeitig nach dem Anheben über eine ausreichend große Höhe zu verfügen, um eine Steifigkeit zu erzielen, die mit den auf den Vibrationen beruhenden Zwängen vereinbar ist. Schlussendlich verschafft die Beweglichkeit jeder Querverstärkung der Verdunkelungsvorrichtung eine optimale Kompaktheit.

Die vorliegende Erfindung betrifft auch die Merkmale, welche sich aus der folgenden Beschreibung ergeben und welche einzeln oder in allen möglichen technischen Kombinationen zu berücksichtigen sind.

Diese als nicht einschränkendes Beispiel gegebene Beschreibung macht besser verständlich, aus was die Erfindung besteht und wie sie realisiert werden kann. Sie wird im Übrigen unter Bezugnahme auf die beigefügten Zeichnungen gegeben, in denen
Fig. 1 eine perspektivische Ansicht einer erfindungsgemäßen Verdunkelungsvorrichtung nach einer ersten Ausführungsform der Erfindung von oben ist, wobei der Stoff in der ausgefahrenen Position dargestellt wird;
Fig. 2 eine Schnittansicht der Verdunkelungsvorrichtung nach Fig. 1 darstellt, wobei sich der Stoff in der Aufnahmeposition befindet;
Fig. 3 eine Längsschnittansicht ist, die insbesondere die Verbindung zwischen der Querverstärkung und dem Stoff der Verdunkelungsvorrichtung nach den Figuren 1 und 2 zeigt, wenn der Stoff ausgefahren ist;
Fig. 4 eine zur Fig. 3 ähnliche Darstellung bildet, bei der jedoch die Verbindung zwischen der Querverstärkung und dem Stoff einer ersten Ausführungsvariante entspricht;
Fig. 5 eine den Figuren 3 und 4 ähnliche Ansicht, jedoch mit einer Verbindung nach einer zweiten Ausführungsvariante;
Fig. 6 im Längsschnitt in seiner Führungsschiene einen der Gleitschuhe der Querverstärkung erkennen lässt, mit der die Verdunkelungsvorrichtung nach den Figuren 1 bis 3 ausgestattet ist;
Fig. 7 eine zur Fig. 6 ähnliche Ansicht darstellt, bei der jedoch der Gleitschuh einer ersten Ausführungsvariante entspricht;
Fig. 8 eine zu den Figuren 6 und 7 ähnliche Ansicht, bei der jedoch der Gleitschuh einer zweiten Ausführungsvariante entspricht;
Fig. 9 den Gleitschuh der Fig. 8 im Querschnitt zeigt;
Fig. 10 in der Perspektive und im Detail ein Ende der Querverstärkung zeigt, das in den Figuren 1, 2, 3 und 6 zu sehen ist;
Fig. 11 in der Perspektive und im Detail eine Ausführungsvariante der Querverstärkung zeigt, die insbesondere mit der in Fig. 7 dargestellten Variante des Gleitschuhs vereinbar ist;
Fig. 12 eine Querverstärkung zeigt, die einer besonders vorteilhaften Ausführungsform der Erfindung entspricht;
Fig. 13 eine Längsschnittansicht einer Verdunkelungsvorrichtung ist, die mit der Querverstärkung der Fig. 12 ausgestattet ist, wobei die genannte Querverstärkung in liegender Position befindlich ist;
Fig. 14 eine zur Fig. 13 ähnliche Ansicht darstellt, bei der jedoch die Querverstärkung in angehobener Position gezeigt ist;
Fig. 15 in der Perspektive von oben eine Verdunkelungsvorrichtung nach einer zweiten Ausführungsform der Erfindung zeigt, wobei der Stoff in ausgefahrener Position dargestellt ist;
Fig. 16 in der Perspektive die Querverstärkung erkennen lässt, mit der die Verdunkelungsvorrichtung der Fig. 15 ausgestattet ist;
Fig. 17 eine Schnittansicht der Verdunkelungsvorrichtung nach Fig. 15 darstellt, wobei sich der Stoff in der Aufnahmeposition befindet;
Fig. 18 eine Längsschnittansicht der Verdunkelungsvorrichtung nach Fig. 15 darstellt, wobei sich der Stoff in der Phase der Verschiebung zwischen den Führungsschienen befindet;
Fig. 19 eine zur Fig. 18 ähnliche Darstellung ist, wobei sich jedoch der Stoff in ausgefahrener Position befindet;
Fig. 20 eine Längsschnittansicht ist, die insbesondere eine Ausführungsvariante im Bereich der Verbindung zwischen der Querverstärkung und dem Stoff zeigt;
Fig. 21 eine zur Fig. 20 ähnliche Ansicht darstellt, bei der jedoch die Verbindung zwischen der Querverstärkung und dem Stoff einer zweiten Ausführungsvariante entspricht.

Aus Gründen der Klarheit werden die jeweils gleichen Bestandteile mit identischen Bezugszeichen bezeichnet. Des Weiteren werden lediglich die für das Verständnis der Erfindung wesentlichen Bestandteile dargestellt, wobei dies auch nicht maßstabsgerecht und nur in schematischer Form erfolgte.

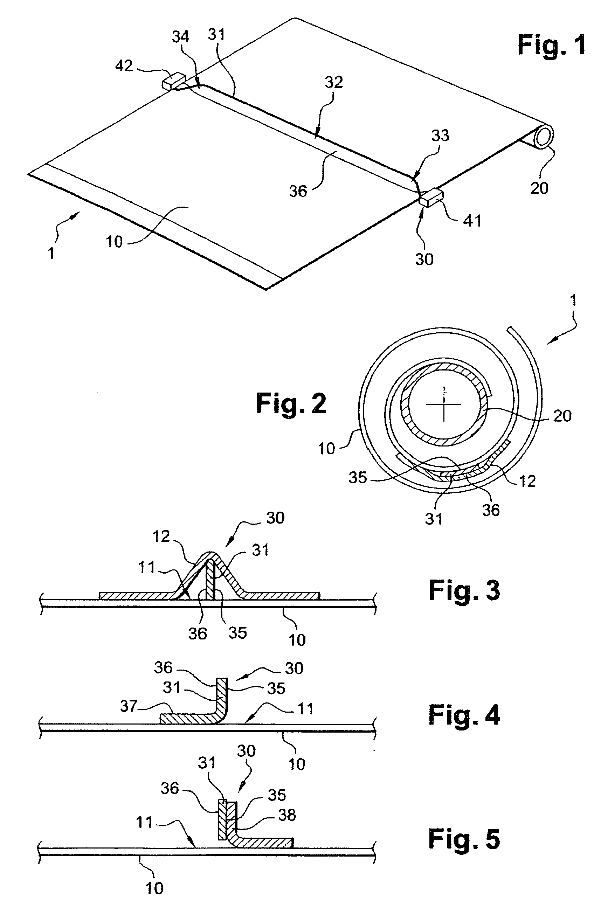

Fig. 1 zeigt eine Verdunkelungsvorrichtung 1, die dazu bestimmt ist, im Inneren des Fahrgastraums eines Kraftfahrzeuges fest verbunden zu werden, um das durch eine die Dachhaut bildende feste Glasscheibe hindurchtretende Licht abzudunkeln.

Die Verdunkelungsvorrichtung 1 ist zunächst mit einem lichtundurchlässigen Stoff 10 versehen, welcher geeignet ist, parallel zur Innenfläche der Glasscheibe ausgefahren zu werden. Für diesen Zweck ist der Stoff 10 für die Verschiebung zwischen einer Aufnahmeposition, in der er auf das vom abzudunkelnden Bereich beabstandet angebrachte Aufwickelrohr 20 aufgewickelt wird (Fig. 2), und einer ausgefahrenen Position, in der er sich unterhalb des abzudunkelnden Bereiches erstreckt (Fig. 1), beweglich montiert.

Die Verdunkelungsvorrichtung 1 wird anschließend mit einer Querverstärkung 30 versehen, welche mit dem Stoff 10 fest verbunden und in der Lage ist, letzteren sowohl in Längsrichtung als auch in Querrichtung in dem abzudunkelnden Bereich abzustützen.

Anzumerken ist, dass der abzudunkelnde Bereich hier durch den wirklich lichtdurchlässigen Teil der Glasscheibe, also denjenigen Teil gebildet wird, der tatsächlich Lichtstrahlen in das Innere des Fahrgastraums eintreten lässt und der demzufolge nicht im Bereich eines beliebigen Teils der Karosserie oder eines beliebigen Bestandteils der Innenausstattung angeordnet ist.

Entsprechend dem Gegenstand der vorliegenden Erfindung ist die Querverstärkung 30 des Weiteren relativ zum Stoff 10 für die Verschiebung zwischen einer liegenden Position und einer angehobenen Position beweglich montiert. Das Ganze ist so ausgestaltet, dass sich die Querverstärkung 30 in der liegenden Position in einer im Wesentlichen zu dem direkt danebenliegenden Teil des Stoffes 11 parallelen Weise erstreckt, wenn sich der Stoff 10 in der Aufnahmeposition befindet (Fig. 2). Außerdem ist das Ganze auch so ausgestaltet, dass sich die Querverstärkung 30 in angehobener Position in einer im Wesentlichen zu dem direkt benachbarten Teil des Stoffes 10 senkrechten Weise erstreckt, wenn sich der Stoff 10 in der ausgefahrenen Position befindet (Fig. 1).

Nach einem Erfindungsmerkmal besteht die Querverstärkung 30 aus einem länglichen, im Wesentlichen flachen und dünnen, eine Stange 31 bildenden Element, wobei fast dessen gesamter Körper 32 hier mit dem Stoff 10 verbunden ist und dessen Enden 33, 34 mit den Gleitschuhen 41, 42 fest verbunden sind. Letztere entsprechen im übrigen zwei Führungsschienen 50, die jeweils beiderseits des abzudunkelnden Bereiches angeordnet sind und sich parallel zu der Verschiebungsrichtung des Stoffes 10 erstrecken, und sind so dimensioniert, dass sie mit diesen in der Gleitbewegung zusammenwirken können.

Nach einem weiteren Erfindungsmerkmal weist die Stange 31 einen Querschnitt auf, dessen Breite wesentlich größer ist als die Höhe, womit zwei gegenüberliegende sogenannte Hauptflächen 35, 36 gebildet werden. Dies bedeutet mit anderen Worten, dass die Stange 31 im Wesentlichen die Form einer Gleitkufe aufweist. Jedenfalls ist das Ganze in der Weise ausgestaltet, dass die Hauptflächen 35, 36 einerseits in der Lage sind, sich im Wesentlichen parallel zu dem direkt danebenliegenden Teil des Stoffes 11 zu erstrecken, wenn die Querverstärkung 30 sich in liegender Position befindet (Fig. 2), und andererseits sich in im Wesentlichen zu dem direkt benachbarten Teil des Stoffes 11 senkrechter Weise zu erstrecken, wenn die Querverstärkung 30 sich in angehobener Position befindet (Fig. 3).

Wie aus den Figuren 2 und 3 klar ersichtlich ist, wird bei diesem lediglich als Beispiel gewählten besonderen Ausführungsbeispiel der Erfindung die Stange 31 im Inneren eines Überzugs 12, der in Querrichtung im Bereich des Stoffes 10 angeordnet ist, in der axialen Rotation frei montiert. Die Stange 31 ist hier also nicht wirklich mit dem Stoff 10 fest verbunden, sondern ist in dem Sinne mit ihr fest verbunden, dass die genannten beiden Elemente verbunden sind, wenn der Stoff 10 für die Verschiebung zwischen der Aufnahmeposition und der ausgefahrenen Position mitgenommen wird.

Bei diesem Ausführungsbeispiel wird der Überzug 12 durch ein Stoffband gebildet, der direkt auf dem Stoff 10 aufgenäht wird. Jede andere Befestigungstechnik könnte jedoch in äquivalenter Weise eingesetzt werden, wie z.B. Kleben, Schweißen usw.

Fig. 4 zeigt eine erste Ausführungsvariante, bei der die Stange 31 und der Stoff 10 effektiv über eine sich drehende Verbindung fest miteinander verbunden werden. Konkreter ausgedrückt ist die Stange 31 in Längsrichtung an einem Träger 37 angelenkt, der in Querrichtung durch Verkleben mit dem Stoff 10 fest verbunden ist.

Bei diesem Ausführungsbeispiel werden die Stange 31 und der Träger 37 mittels einer scharnierartigen Verbindung zusammengefügt. Außerdem könnte auch hier jede andere Befestigungstechnik in äquivalenter Weise herangezogen werden, um den Träger 37 fest mit dem Stoff 10 zu verbinden.

Fig. 5 zeigt ihrerseits eine zweite Ausführungsvariante, die wie die erste bedeutet, dass die Stange 31 und der Stoff 10 tatsächlich fest miteinander verbunden werden. Genauer gesagt wird die Stange 31 hier in Längsrichtung relativ zum Stoff 10 über ein in Querrichtung an dem Stoff 10 fest verbundenes elastisches Verbindungselement 38 drehbar montiert.

Bei diesem Ausführungsbeispiel wird die Stange 31 mit einem ein Verbindungselement 38 bildenden Stoffband verklebt, das im übrigen direkt auf den Stoff 10 aufgenäht wird. Auch hier könnte jede andere an sich bekannte Befestigungstechnik in äquivalenter Weise herangezogen werden, um das elastische Verbindungselement 38 einerseits mit der Stange 31 und andererseits mit dem Stoff 10 zu verbinden.

Die Verdunkelungsvorrichtung 1 entspricht hier einer ersten Ausführungsform der Erfindung in dem Sinne, dass jeder Gleitschuh 41, 42 der Querverstärkung 30 in einer im Wesentlichen zu den Hauptflächen 35, 36 der Stange 31 senkrechten Richtung zu gleiten vermag und die entsprechende Führungsschiene 50 sich in einer im Wesentlichen zu dem abzudunkelnden Bereich parallelen Weise erstreckt. Diese erste Ausführungsform weist den Vorteil auf, mehrere Positionen zu umfassen, da die Querverstärkung 30 aktiv wird, sowie sie in die Führungsschienen 50 eingeführt wird, d.h. unabhängig von ihrer Position längs der genannten Führungsschiene 50.

In besonders vorteilhafter Weise ist jede Führungsschiene 50 mit einem Eintrittsteil in erweiterter Form ausgestattet, der das Eingreifen jedes Gleitschuhs 41, 42, mit dem die Führungsschiene gleitend zusammenwirken soll, zu "kanalisieren" vermag.

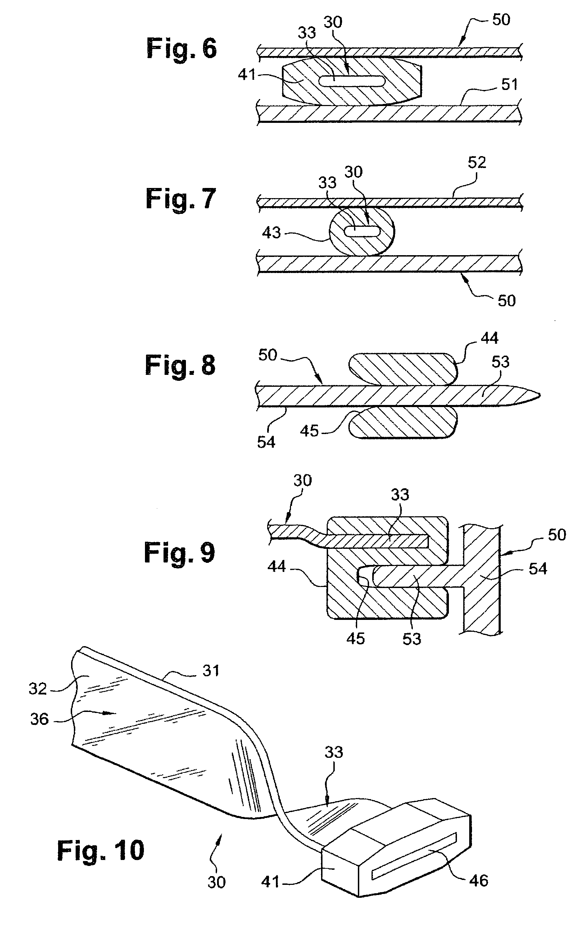

Wie im Detail in Fig. 6 zu sehen ist, weist jeder Gleitschuh 41, 42 der Querverstärkung 30 eine längliche Form auf, welche für das Gleiten in Längsrichtung im Inneren ihrer Führungsschiene 50 geeignet ist.

Bei diesem Ausführungsbeispiel hat jede Führungsschiene 50 die Form eines klassischen Profils 51 mit U-förmigem Querschnitt. Jeder Gleitschuh 41, 42 wird vorzugsweise aus Plastikmaterial mit geringem Reibungskoeffizient ausgeführt, während jedes Profil 51 insbesondere aus Metall oder Plastik hergestellt werden kann.

Fig. 7 zeigt eine erste Ausführungsvariante, bei der jeder Gleitschuh 43 der Querverstärkung 30 eine zylindrische Form hat, welche radial in der entsprechenden Führungsschiene 50 gleiten und sich in dieser axial drehen kann.

Wie im vorangegangenen Fall hat jede Führungsschiene 50 dieses Ausführungsbeispiels die Form eines klassischen Profils 52 mit U-förmigem Querschnitt, dessen Abmessungen perfekt an diejenigen des Gleitschuhs 43 angepasst sind. Des Weiteren wird auch hier jeder Gleitschuh 43 vorzugsweise aus Plastikmaterial ausgeführt, während jedes Profil 52 insbesondere aus Metall oder Plastik bestehen kann.

Die Figuren 8 und 9 zeigen eine zweite Ausführungsvariante, bei der jeder Gleitschuh 44 der Querverstärkung 30 jeweils mit einer Nut 45 versehen ist, die längs einer in Längsrichtung an der entsprechenden Führungsschiene 50 angebrachten Rippe 53 zu gleiten vermag.

Bei diesem Ausführungsbeispiel weist jede Führungsschiene 50 die Form eines Profils 54 mit T-förmigem Querschnitt auf, dessen Basis vorteilhafterweise dazu dient, die Rippe 53 zu bilden. Jeder Gleitschuh 44 wird wiederum vorzugsweise aus Plastikmaterial mit geringem Reibungskoeffizient ausgeführt, während jedes Profil 54 gleichermaßen aus Metall oder aus Plastik bestehen kann.

Fig. 10 zeigt im weiteren Detail ein Ende der Querverstärkung 30, das dazu dient, den Stoff 10 der Verdunkelungsvorrichtung 1 abzustützen. Es ist zu bemerken, dass jedes Ende 33, 34 der Stange 31 wellig ausgeführt ist, um sich relativ zu den Hauptflächen 35, 36 des Körpers 32 im Wesentlichen senkrecht zu erstrecken. Es ist ebenfalls zu bemerken, dass jeder Gleitschuh 41, 42 eine durchgehende Bohrung 46 aufweist, die im Wesentlichen zum Ende 33, 34 der Stange 31 komplementär ist, was es ihm ermöglicht, durch Eingriff fest verbunden zu werden. Diese feste Verbindung kann natürlich durch Verkleben, Schweißen oder jede sonstige an sich bekannte Befestigungstechnik vervollständigt werden.

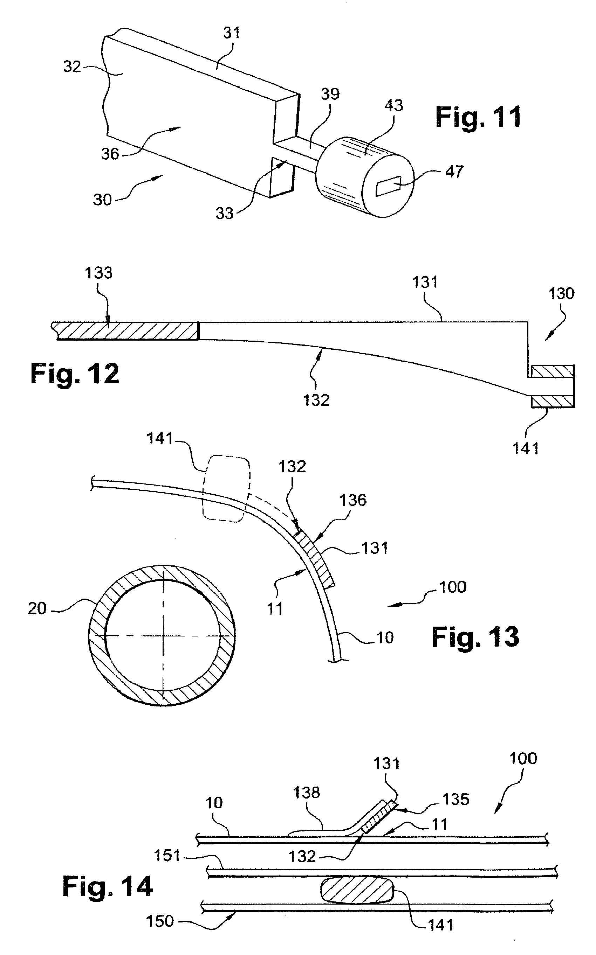

Nach einer in Fig. 11 zu sehenden Ausführungsvariante kann das Ende der Querverstärkung 30 auch die Form einer Klaue 39 mit geringem Querschnitt annehmen, die sich in der Verlängerung des Körpers 32 der Stange 31 erstreckt. Diese Ausgestaltung erweist sich insbesondere als geeignet, um mit der Verwendung von zylindrischen Gleitschuhen 43 des Typs gekoppelt zu werden, die in Fig. 7 dargestellt werden. Auch dort wird die Befestigung jedes Gleitschuhs 43 an einem Ende 33, 34 der Stange 31 dank des Vorhandenseins einer Positionierungsbohrung 47, die durch den genannten Gleitschuh 43 angebracht wird und die eine im Wesentlichen zu dem entsprechenden Ende 33, 34 der Stange 31 komplementäre Form hat, durch Eingriff verwirklicht. Auch hier kann die feste Verbindung natürlich durch Verkleben, Schweißen oder jede sonstige an sich bekannte Befestigungstechnik vervollständigt werden.

Fig. 12 zeigt eine Querverstärkung 130 entsprechend einer besonders vorteilhaften Ausführungsform der Erfindung. Sie ist dadurch gekennzeichnet, dass die Stange 131 der Querverstärkung 130 eine Bombierungsfläche 132 aufweist, die eine konkave Form hat und in der Lage ist, durch Berührung mit dem Stoff 10 zusammenzuwirken, wenn die Querverstärkung 130 sich in der angehobenen Position befindet.

Nach einem Merkmal dieser Ausführungsform ist der Stoff 10 mit der Querverstärkung 130 auf der Höhe des Teils 133 der Stange 131 verbunden, die den von der Verschiebungsebene des Stoffes 10 am weitesteten entfernt liegenden Teil der Bombierungsfläche 132 trägt, wenn die Querverstärkung 130 sich in der angehobenen Position befindet.

Diese besondere Ausführungsform erweist sich in dem Sinne als vorteilhaft, als sie es ermöglicht, den Stoff 10 in Querrichtung zu bombieren, sowie sich jede Querverstärkung 130 in der angehobenen Position befindet (Fig. 14). Wenn in der Tat jede Querverstärkung 130 von ihrer liegenden Position in die angehobene Position übergeht, wird der Stoff 10 in Berührung mit der Bombierungsfläche 132 gezogen, was ihn zwingt, sich enger an die untere Krümmung der Stange 131 anzuschmiegen. Schließlich ermöglicht dies einen weiteren Raumgewinn im Bereich des vertikalen Platzbedarfs der erfindungsgemäßen Verdunkelungsvorrichtung, was zu einem Gewinn an Kopffreiheit für das damit ausgestattete Kraftfahrzeug führt.

Die Figuren 13 und 14 gestatten die Darstellung des Funktionierens einer Verdunkelungsvorrichtung 100, die eine solche Querverstärkung 130 aufweist.

Zunächst ist zu bemerken, dass der Einsatz der Querverstärkung 130 im Wesentlichen zu demjenigen ihres Gegenstücks in der Verdunkelungsvorrichtung 1 ähnlich ist. In der Tat ist die Querverstärkung 130 mit den Gleitschuhen 141 versehen, welche nach einer zu den Hauptflächen 135, 136 der Stange 131 im Wesentlichen senkrechten Weise zu gleiten vermögen, und jede Führungsschiene 150 erstreckt sich in im Wesentlichen zum abzudunkelnden Bereich paralleler Weise. Im übrigen weist jeder Gleitschuh 141 eine längliche Form auf, die, wie vorstehend ausgeführt, geeignet ist, in Längsrichtung im Inneren eines Profils 151 mit U-förmigem Querschnitt zu gleiten, das eine Führungsschiene 150 bildet.

Weiterhin wird bemerkt, dass die drehbare Verbindung zwischen der Stange 131 und dem Stoff 10 über ein elastisches Verbindungselement 138 realisiert wird, das die Form eines Stoffbandes hat, dessen eine Kante mit der Stange 131 verklebt ist und deren andere Kante in Querrichtung auf den Stoff 10 aufgenäht wird.

Schließlich ist anzumerken, dass die Stange 131 in besonders vorteilhafter Weise einen abgerundeten Querschnitt aufweist, dessen Krümmung im Wesentlichen derjenigen des direkt danebenliegenden Teils des Stoffes 11 entspricht, wenn der Stoff 10 in die Aufnahmeposition aufgerollt wird. Dieses Merkmal ermöglicht der Stange 131, sich bestmöglich an den direkt danebenliegenden Teil des Stoffes 11 anzuschmiegen, wenn die Querverstärkung 130 in liegender Position befindlich ist, insbesondere wenn der Stoff 10 sich in der Aufnahmeposition befindet.

Nach einer Ausführungsvariante, die es auch ermöglicht, den Stoff 10 in Querrichtung zu bombieren, kann die Stange 31 der Querverstärkung 30 entsprechend einer im Wesentlichen zu ihren Hauptfläche 35, 36 parallelen Ebene gewölbt sein, jedoch eine Flexibilität der Art aufweisen, dass es ihr ermöglicht wird, sich in im Wesentlichen linearer Form dann zu erstrecken, wenn die genannte Querverstärkung 30 in die liegende Position übergeht.

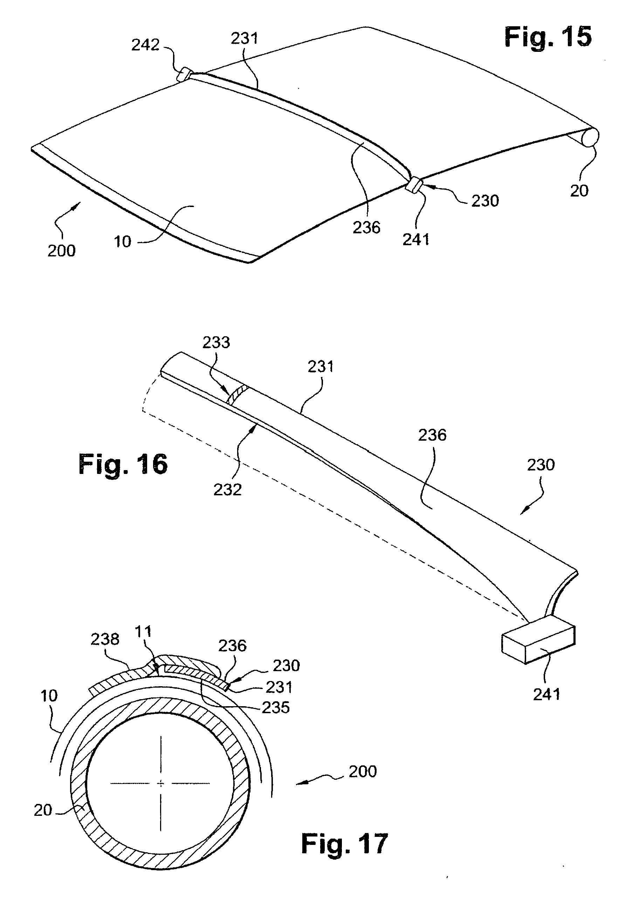

Fig. 15 zeigt eine Verdunkelungsvorrichtung 200, die ebenfalls dazu bestimmt ist, im Inneren eines Fahrgastraums eines Kraftfahrzeuges angebracht zu werden, um das durch eine die Dachhaut bildende fest Glasscheibe hindurchtretende Licht abdunkeln zu können.

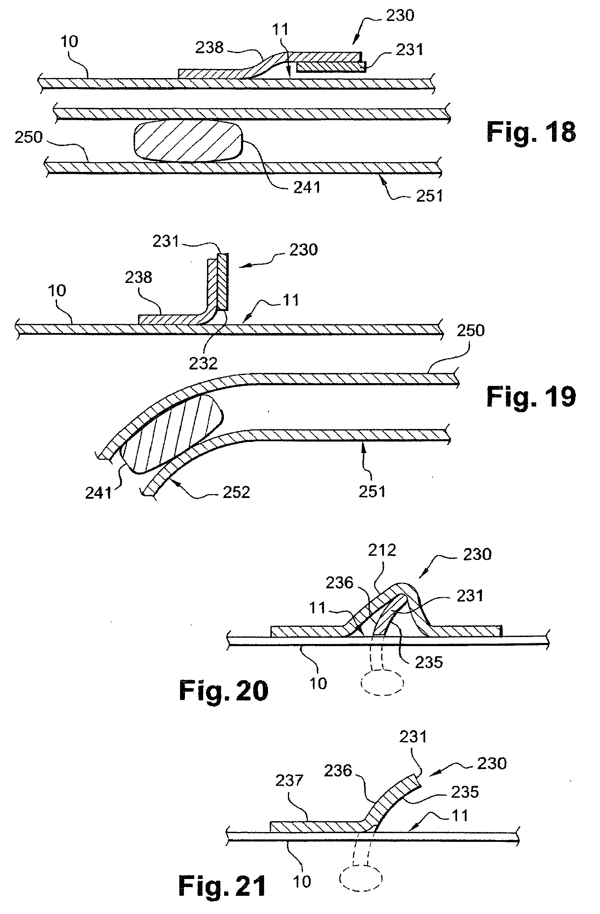

Die zweite Ausführungsform der Erfindung unterscheidet sich jedoch von der ersten zunächst durch die Tatsache, dass jeder Gleitschuh 241, 242 der Querverstärkung 230 hier in der Lage ist, in einer im Wesentlichen zu den Hauptflächen 235, 236 der Stange 231 parallelen Richtung zu gleiten (Fig. 16). Diese zweite Ausführungsform unterscheidet sich des weiteren durch die Tatsache, dass jede Führungsschiene 250 hier einen Hauptteil 251, der sich im Wesentlichen in paralleler Weise zu dem abzudunkelnden Bereich erstreckt, sowie einen Abschlussteil 252 aufweist, der sich in im Wesentlichen zum Ende des genannten abzudunkelnden Bereiches senkrechter Weise erstreckt (Fig. 19).

In besonders vorteilhafter Weise erstreckt sich der Abschlussteil 252 jeder Führungsschiene 250 in einer Richtung, die geeignet ist, die Querverstärkung 230 in angehobener Position zu positionieren, wenn sich der Stoff 10 in ausgefahrener Position befindet, wobei die Hauptflächen 235, 236 der Stange 231 sich dann in im Wesentlichen zum abzudunkelnden Bereich senkrechter Weise erstrecken (Fig. 19).

Es ist anzumerken, dass die zweite Ausführungsform nur über zwei Funktionspositionen verfügt, die jeweils der Aufnahmeposition und der ausgefahrenen Position des Stoffes 10 entsprechen.

Ebenso wie bei der ersten Ausführungsform ist jede Führungsschiene 50 im übrigen vorteilhafterweise mit einem Eintrittsteil in verbreiterter Form ausgestattet, der das Eingreifen jedes Gleitschuhs 241, 242, mit dem die Führungsschiene gleitend zusammenwirken soll, zu "kanalisieren" vermag.

Wie in Fig. 16 zu sehen ist, ist die Stange 231 der Querverstärkung 230 mit einer Bombierungsfläche 232 in konkaver Form ebenso versehen wie bei einer der Varianten der ersten Ausführungsform. Desgleichen ist der Stoff 10 mit der Querverstärkung 230 im Bereich des Teils 233 der Stange 231 verbunden, der die von der Verschiebungsebene des Stoffes 10 am weitesten entfernte Bombierungsfläche 232 trägt, wenn sich die Querverstärkung 230 in angehobener Position befindet. Weiter ist in Fig. 16 zu sehen, dass die Stange 231 einen abgerundeten Querschnitt hat, dessen Krümmung im Wesentlichen derjenigen des direkt benachbarten Teils des Stoffes 11 entspricht, wenn der Stoff 10 in die Aufnahmeposition aufgerollt ist (Fig. 17).

Entsprechend Fig. 17 wird die drehbare Verbindung zwischen der Stange 231 und dem Stoff 10 hier über ein elastisches Verbindungselement 238 hergestellt, das die Form eines Stoffbandes hat, dessen eine Kante mit der Hauptfläche 236 der Stange 231 verklebt ist und deren andere Kante in Querrichtung auf den Stoff 10 aufgenäht ist.

Fig. 20 zeigt eine erste Ausführungsvariante hinsichtlich der Verbindung zwischen der Querverstärkung 230 und dem Stoff 10. Es ist zu bemerken, dass die Stange 231 hier in der axialen Rotation im Inneren eines Überzugs 212, der in Querrichtung im Bereich des Stoffes 10 angeordnet ist, frei montiert wird. Bei diesem Ausführungsbeispiel wird der Überzug 212 aus einem Stoffband gebildet, das direkt auf den Stoff 10 aufgenäht wird. Es kann natürlich jede andere bekannte Befestigungstechnik in äquivalenter Weise verwendet werden, wie z.B. Verkleben, Schweißen usw.

Fig. 21 ist eine zweite Ausführungsvariante im Bereich der Verbindung zwischen der Querverstärkung 230 und dem Stoff 10. Die Stange 231 und der Stoff 10 werden dieses Mal tatsächlich über eine drehbare Verbindung miteinander fest verbunden. Konkreter gesagt wird die Stange 231 in Längsrichtung an einen Träger 237 angelenkt, der in Querrichtung mit dem Stoff 10 durch Verkleben fest verbunden ist. Bei diesem Ausführungsbeispiel sind die Stange 231 und der Träger 237 mittels einer scharnierartigen Verbindung miteinander verbunden. Auch hier kann jede andere Befestigungstechnik in äquivalenter Weise verwendet werden, um den Träger 37 mit dem Stoff fest zu verbinden.

Nach einer besonders vorteilhaften Ausführungsform kann eine Verdunkelungsvorrichtung 1, 100, 200 nach der Erfindung außerdem Motormittel aufweisen, die in der Lage sind, den Stoff 10 für die Verschiebung zwischen der Aufnahmeposition und der ausgefahrenen Position sowie sämtlichen Zwischenpositionen anzutreiben. Diese Ausgestaltung erweist sich als besonders geeignet, wenn die abzudunkelnde Fläche groß ist, d.h. also wenn die Verdunkelungsvorrichtung 1, 100, 200 aus einem relativ schweren Stoff 10 besteht, der mit einer Vielzahl von Querverstärkungen 30, 130, 230 kombiniert ist.

Natürlich betrifft die Erfindung ganz allgemein jedes mit mindestens einer Verdunkelungsvorrichtung 1, 100, 200 wie vorstehend beschrieben ausgestattetes Kraftfahrzeug.

## Patentansprüche

1. Verdunkelungsvorrichtung (1, 100, 200), die einerseits einen Stoff (10), der für eine Verschiebung zwischen einer Aufnahmeposition, in der er von einem abzudunkelnden Bereich beabstandet aufgerollt ist, und einer ausgefahrenen Position, in der er sich unterhalb des abzudunkelnden Bereiches erstreckt, beweglich montiert ist, und mindestens eine Querverstärkung (30, 130, 230) aufweist, welche mit dem Stoff (10) fest verbunden und den Stoff (10) in Längsrichtung und in Querrichtung in dem abzudunkelnden Bereich abzustützt, **dadurch gekennzeichnet, dass** jede Querverstärkung (30, 130, 230) des Weiteren relativ zum Stoff (10) für die Verschiebung zwischen einer liegenden Position, in der er sich im Wesentlichen zu einem direkt benachbarten Teil des Stoffes (11) parallel erstreckt, wenn sich der Stoff (10) in der Aufnahmeposition befindet, und einer angehobenen Position, in der er sich im Wesentlichen zu dem direkt benachbarten Teil des Stoffes (11) senkrecht erstreckt, wenn sich der Stoff (10) in der ausgefahrenen Position befindet.

2. Verdunkelungsvorrichtung (1, 100, 200) nach Anspruch 1, **dadurch gekennzeichnet, dass** jede Querverstärkung (30, 130, 230) aus einem länglichen, im Wesentlichen flachen und dünnen, eine Stange (31, 131, 231) bildenden Element besteht, von dem mindestens ein Teil des Körpers (32, 132) mit dem Stoff (10) fest verbunden ist, und dessen Enden (33, 34) mit Gleitschuhen (41, 42, 43, 44, 141, 241) fest verbunden sind, die mit zwei Führungsschienen (50, 150, 250), die jeweils beiderseits des abzudunkelnden Bereiches angeordnet sind, parallel zu der Verschiebungsrichtung des Stoffes (10) in der Gleitbewegung zusammenwirken.

3. Verdunkelungsvorrichtung (1, 100, 200) nach Anspruch 2, **dadurch gekennzeichnet, dass** die Stange (31, 131, 231) einen Querschnitt aufweist, dessen Breite wesentlich größer ist als die Höhe, womit zwei gegenüberliegende Hauptflächen (35, 36, 235, 236) gebildet sind, die sich einerseits im Wesentlichen parallel zu dem direkt benachbarten Teil des Stoffes (11) erstrecken, wenn sich die Querverstärkung (30, 130, 230) in liegender Position befindet, und die sich andererseits im Wesentlichen zu dem direkt benachbarten Teil des Stoffes (11) senkrecht erstrecken, wenn sich die Querverstärkung (30, 130, 230) in angehobener Position befindet.

4. Verdunkelungsvorrichtung (100, 200) nach einem der Ansprüche 2 oder 3, **dadurch gekennzeichnet, dass** die Stange (131, 231) der Querverstärkung (130, 230) einen abgerundeten Querschnitt aufweist, dessen Krümmung im Wesentlichen derjenigen des direkt danebenliegenden Teils des Stoffes (11) entspricht, wenn der Stoff (10) in die Aufnahmeposition aufgerollt ist.

5. Verdunkelungsvorrichtung (1, 200) nach einem der Ansprüche 2 bis 4, **dadurch gekennzeichnet, dass** die Stange (31, 231) im Inneren eines Überzugs (12, 212), der in Querrichtung im Bereich des Stoffes (10) angeordnet ist, in der axialen Rotation frei montiert ist.

6. Verdunkelungsvorrichtung (1, 200) nach einem der Ansprüche 2 bis 4, **dadurch gekennzeichnet, dass** die Stange (31, 231) in Längsrichtung an einem Träger (37, 237) angelenkt ist, der in Querrichtung mit dem Stoff (10) fest verbunden ist.

7. Verdunkelungsvorrichtung (1, 100, 200) nach einem der Ansprüche 2 bis 4, **dadurch gekennzeichnet, dass** die Stange (31, 131, 231) in Längsrichtung über ein elastisches Verbindungselement (38, 138, 238), das in Querrichtung mit dem Stoff (10) fest verbunden ist, drehbar montiert ist.

8. Verdunkelungsvorrichtung (1, 100) nach einem der Ansprüche 2 bis 7, **dadurch gekennzeichnet, dass** jeder Gleitschuh (41, 42, 43, 44, 141) der Querverstärkung (30, 130) in einer im Wesentlichen zu den Hauptflächen (35, 36) der Stange (31, 131) senkrechten Richtung gleitet, und **dadurch**, dass sich die entsprechende Führungsschiene (50, 150) im Wesentlichen parallel zu dem abzudunkelnden Bereich erstreckt.

9. Verdunkelungsvorrichtung (200) nach einem der Ansprüche 2 bis 7, **dadurch gekennzeichnet, dass** jeder Gleitschuh (241) der Querverstärkung (230) in einer im Wesentlichen zu den Hauptflächen (235, 236) der Stange (231) parallelen Richtung gleitet, und **dadurch**, dass jede Führungsschiene (250) einen Hauptteil (251), der sich im Wesentlichen in paralleler Weise zu dem abzudunkelnden Bereich erstreckt, sowie einen Abschlussteil (252) aufweist, der sich im Wesentlichen senkrecht zum Ende des abzudunkelnden Bereiches erstreckt.

10. Verdunkelungsvorrichtung (200) nach Anspruch 9, **dadurch gekennzeichnet, dass** sich der Abschlussteil (252) jeder Führungsschiene (250) in einer Richtung erstreckt, die geeignet ist, die Querverstärkung (230) in angehobener Position zu positionieren, wenn sich der Stoff (10) in ausgefahrener Position befindet, wobei die Hauptflächen (235, 236) der Stange (231) sich dann in im Wesentlichen zum abzudunkelnden Bereich senkrechter Weise erstrecken.

11. Verdunkelungsvorrichtung (1, 100, 200) nach einem der Ansprüche 2 bis 10, **dadurch gekennzeichnet, dass** jede Führungsschiene (50, 150, 250) einen Eintrittsteil in verbreiterter Form aufweist, der das Eingreifen jedes Gleitschuhs (41, 42, 43, 44, 141, 241), mit dem die Führungsschiene gleitend zusammenwirken soll, kanalisiert.

12. Verdunkelungsvorrichtung (1, 100, 200) nach einem der Ansprüche 2 bis 11, **dadurch gekennzeichnet, dass** jeder Gleitschuh (41, 42, 141, 241) der Querverstärkung (30, 130, 230) eine längliche Form aufweist, die für das Gleiten in Längsrichtung in der entsprechenden Führungsschiene (50, 150, 250) geeignet ist.

13. Verdunkelungsvorrichtung (1) nach einem der Ansprüche 2 bis 11, **dadurch gekennzeichnet, dass** jeder Gleitschuh (42) der Querverstärkung (30) eine zylindrische Form aufweist, welche radial in der entsprechenden Führungsschiene (50) gleiten und sich in dieser axial drehen kann.

14. Verdunkelungsvorrichtung (1) nach einem der Ansprüche 2 bis 11, **dadurch gekennzeichnet, dass** jeder Gleitschuh (44) der Querverstärkung (30) mit einer Nut (45) versehen ist, die längs einer in Längsrichtung an der entsprechenden Führungsschiene (50) angebrachten Rippe (53) gleitet.

15. Verdunkelungsvorrichtung (100, 200) nach einem der Ansprüche 2 bis 14, **dadurch gekennzeichnet, dass** die Stange (131, 231) der Querverstärkung (130, 230) mit einer Bombierungsfläche (132, 232) in konkaver Form versehen ist, die durch Berührung mit dem Stoff (10) zusammenwirkt, wenn sich die Querverstärkung (130, 230) in der angehobenen Position befindet.

16. Verdunkelungsvorrichtung (100, 200) nach Anspruch 15, **dadurch gekennzeichnet, dass** der Stoff (10) mit der Querverstärkung (130, 230) im Bereich des Teils (133, 233) der Stange (131, 231) verbunden ist, der den von der Verschiebungsebene des Stoffes (10) am weitesten entfernten Teil der Bombierungsfläche (132, 232) trägt, wenn sich die Querverstärkung (130, 230) in angehobener Position befindet.

17. Verdunkelungsvorrichtung (1) nach einem der Ansprüche 2 bis 16, **dadurch gekennzeichnet, dass** die Stange (31) der Querverstärkung (30) entsprechend einer im Wesentlichen zu ihrer Hauptfläche (35, 36) parallelen Ebene gewölbt ist und eine Flexibilität der Art aufweist, dass sie sich im Wesentlichen linear erstreckt, wenn die Querverstärkung (30) in die liegende Position übergeht.

18. Verdunkelungsvorrichtung (1, 100, 200) nach einem der Ansprüche 1 bis 17, **dadurch gekennzeichnet, dass** sie Motormittel aufweist, die den Stoff (10) für die Verschiebung zwischen der Aufnahmeposition und der ausgefahrenen Position mitnehmen.
